# FASCICULE DE BREVET EUROPEEN

(11) **EP 4 028 249 B1**
(45) Date de publication et mention de la délivrance du brevet: **12.08.2026**
(21) Numéro de dépôt: 20786010.7
(22) Date de dépôt: 03.09.2020
(51) Int. Cl.: B29C 70/32, B29C 33/30, B29C 70/34, B29C 70/48, F01D 25/24, B29L 31/00

(54) **PROCEDE DE FERMETURE D'UN MOULE D'INJECTION UTILISANT DES FEUILLARDS ANTI-PINCEMENT**
VERFAHREN ZUM SCHLIESSEN EINER SPRITZGIESSFORM MITTELS EINKLEMMSCHUTZBÄNDERN
METHOD FOR CLOSING AN INJECTION-MOULDING MOULD USING ANTI-NIP TAPES

(30) Priorité: 12.09.2019 FR 1910080
(43) Date de publication de la demande: 20.07.2022
(73) Titulaire: SAFRAN AIRCRAFT ENGINES, 75015 Paris (FR)
(72) Inventeur: GUILLOT, Maxime, 77550 MOISSY-CRAMAYEL (FR); BLAISE, Maxime, Marie, Désiré, 77550 MOISSY-CRAMAYEL (FR); FABRE, Hubert, Jean, Marie, 77550 MOISSY-CRAMAYEL (FR)
(74) Mandataire: Cabinet Beau de Loménie
(86) Numéro de dépôt international: PCT/FR2020/051530
(87) Numéro de publication internationale: WO 2021/048486

(56) Documents cités:
- US-A1- 2014 239 540
- US-A1- 2018 370 082
- US-B2- 9 821 520

## Description

### Domaine Technique

La présente invention se rapporte au domaine général de la fabrication de pièces de révolution telles que des carters de turbine à gaz.

### Technique antérieure

Dans le domaine aéronautique, on cherche à réduire la masse des composants des moteurs tout en maintenant à un haut niveau leurs propriétés mécaniques. Par exemple, dans une turbomachine aéronautique, le carter de soufflante définissant le contour de la veine d'entrée d'air du moteur et à l'intérieur duquel est logé le rotor supportant les aubes de la soufflante est maintenant réalisé en matériau composite.

La fabrication d'un carter de soufflante en matériau composite débute par la mise en place par enroulement d'un renfort en fibres sur un mandrin dont le profil épouse celui du carter à réaliser. Le renfort fibreux peut être réalisé, par exemple, par tissage tridimensionnel ou multicouche comme cela est décrit dans le brevet US 8 322 971. Ce renfort fibreux est mis en forme pour constituer une seule pièce comprenant une portion tubulaire et des flasques correspondant aux brides du carter. La fabrication se poursuit par la densification de la préforme fibreuse par une matrice polymère qui consiste à imprégner la préforme par une résine et à polymériser cette dernière pour obtenir la pièce finale.

L'invention concerne plus particulièrement le mode de fabrication où l'imprégnation de la préforme fibreuse est réalisée par le procédé de moulage par injection dit RTM (pour Resin Transfert Moulding). Selon ce procédé, on enferme la préforme fibreuse dans un moule rigide de géométrie figée comprenant un mandrin ou tambour sur lequel la préforme fibreuse est enroulée et un contre-moule que l'on vient déposer sur la préforme fibreuse et dont la forme correspond à la pièce de révolution que l'on souhaite obtenir, et on injecte la résine sous pression et température contrôlée à l'intérieur du moule après avoir rapproché les parois des deux parties de moule et y avoir fait le vide le cas échéant. Une fois la résine injectée, on procède à sa polymérisation par chauffage du moule et après l'injection et la polymérisation, la pièce finale est démoulée puis détourée pour enlever les excès de résine et les chanfreins sont usinés pour obtenir la pièce souhaitée, par exemple un carter. Comme la préforme est foisonnée au moment de son enroulement sur le mandrin, c'est-à-dire qu'elle présente une surépaisseur par rapport à l'épaisseur théorique de la pièce finie, la fermeture du moule assure aussi la fonction de compactage définitif de la préforme pour l'amener à son épaisseur finale.

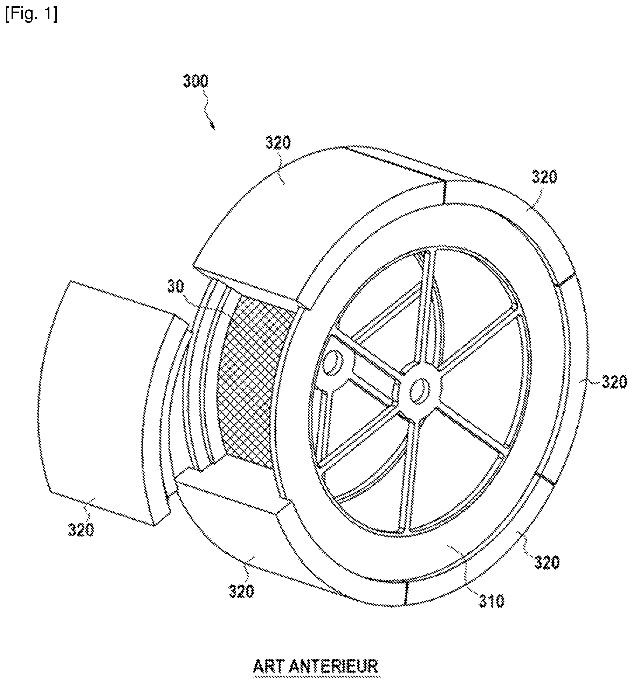

La figure 1 illustre un moule d'injection RTM 300 composé d'un tambour ou mandrin 310 sur lequel est enroulée une préforme fibreuse 30 et d'un contre-moule formé par une pluralité de secteur angulaires 320. La fermeture du moule est réalisée par les secteurs angulaires 320 qui assurent le compactage de la préforme. Un procédé de fermeture d'un tel moule est notamment décrit dans le document US 2018/370082, qui divulgue le préambule de la revendication 1.

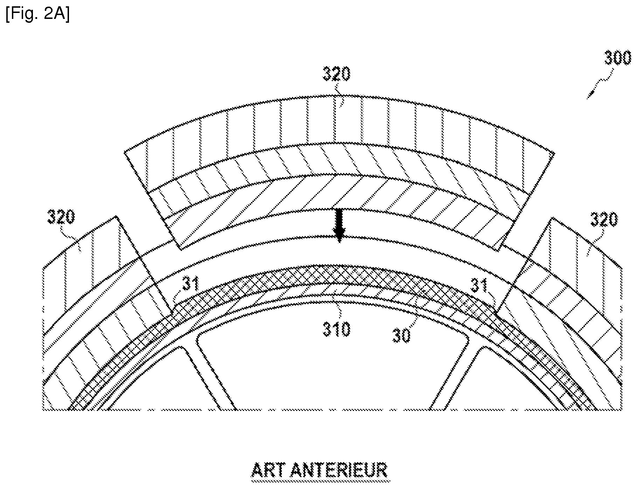

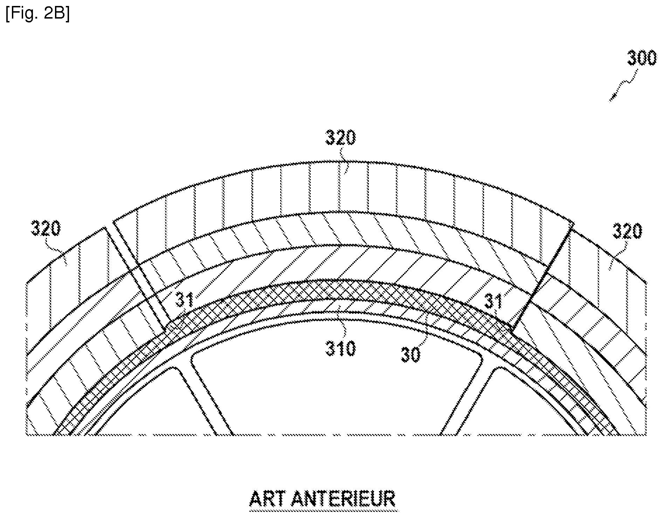

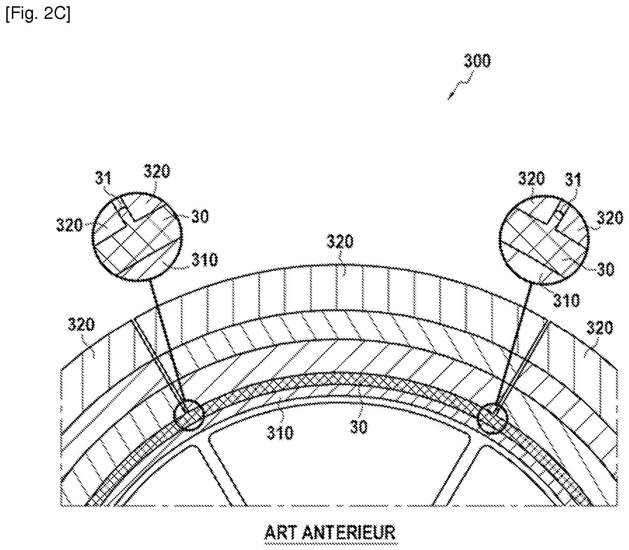

Toutefois, la fermeture du moule par de tels secteurs angulaires s'avère être une opération délicate. En effet, comme illustré sur la figure 2A, on place d'abord un secteur sur deux qui compacte chacun localement la préforme fibreuse. La préforme fibreuse 30 présente des boursouflures 31 au voisinage des extrémités de chaque secteur angulaire 320 car elle n'est plus compactée. La fermeture du moule se poursuit par le positionnement des secteurs angulaires restants entre les secteurs déjà positionnés comme illustré sur les figures 2B et 2C. Lors de la mise en place de ces secteurs, les boursouflures 31 sont repoussées contre les bords des secteurs déjà positionnés car la préforme est chassée du milieu du secteur par la compaction. En outre, la forme des secteurs et la direction de fermeture du moule font qu'il subsiste un espace entre les secteurs jusqu'au dernier moment de la fermeture du moule. Une partie des boursouflures 31 pénètrent alors dans cet espace pour être finalement pincée entre les bords des secteurs adjacents comme représenté sur la figure 2C. Les fibres de la préforme ainsi pincées entraînent la création de défauts dits « pinch fibers » sur la pièce finie. En effet, ces fibres pincées (« pinch fibers ») se retrouvent sur la pièce finie, c'est-à-dire après injection de la résine dans préforme et transformation de celle-ci en matrice, sous forme de boursouflures présentes sur la surface externe de la pièce. Afin d'avoir un état de surface satisfaisant, les boursouflures sont poncées, ce qui entraîne une rupture dans la continuité des fils ou torons dans la pièce et, par conséquent, un abattement important des propriétés mécaniques de cette dernière.

### Exposé de l'invention

L'invention a pour but de proposer une solution qui évite les inconvénients précités.

Ce but est atteint notamment grâce à un procédé de fermeture d'un moule d'injection pour la fabrication d'une pièce de révolution en matériau composite, le moule comprenant :
- un mandrin supportant une préforme fibreuse obtenue par enroulement d'une bande fibreuse, le mandrin comprenant une paroi annulaire dont le profil de la surface extérieure correspond à celui de la surface interne de la pièce à fabriquer,
- une pluralité de secteurs angulaires comprenant une base annulaire destinée à venir en contact de la texture fibreuse, la base annulaire s'étendant entre des premier et deuxième bords longitudinaux suivant une direction axiale et entre des premier et deuxième bords latéraux suivant une direction circonférentielle, la base annulaire de chaque secteur présentant une forme correspondant à la forme de la pièce de révolution à fabriquer,

le procédé comprenant le positionnement et la fixation successifs des secteurs angulaires sur le mandrin, la base annulaire de chaque secteur compactant la portion de préforme fibreuse présente en vis-à-vis, les bords latéraux de la base annulaire de chaque secteur angulaire étant en contact avec les bords latéraux de la base annulaire des secteurs adjacents,
caractérisé en ce que, avant le positionnement et la fixation des secteurs angulaires sur le mandrin, des feuillards sont placés sur la surface exposée de la préforme fibreuse, chaque feuillard couvrant une zone de la préforme fibreuse située en regard d'une zone de jonction entre deux bords latéraux de la base annulaire de deux secteurs angulaires adjacents et en ce que chaque feuillard présente une forme correspondant à la forme de la base annulaire des deux secteurs angulaires adjacents au niveau de la zone de jonction.

Ainsi, selon le procédé de l'invention, la préforme fibreuse est protégée des éventuels pincements entre deux secteurs angulaires adjacents lors de la fermeture du moule. En effet, les feuillards couvrant la préforme dans des zones correspondant aux zones de jonction entre les secteurs, ils empêchent que la portion de préforme présente au niveau des boursouflures soit repoussée contre les bords latéraux des secteurs angulaires, ce qui permet d'éviter tout pincement de la préforme entre les bords latéraux de deux secteurs adjacents. Par conséquent, on évite l'apparition de défauts de type « pinch fibers » sur la pièce finie. Il est ainsi possible de compacter la préforme avec chacun des secteurs angulaires sans conséquence sur les propriétés mécaniques de la pièce finie.

Selon une caractéristique particulière du procédé de fermeture d'un moule d'injection de l'invention, les feuillards sont en matériau composite comprenant un renfort fibreux densifié par une matrice. Le renfort fibreux de chaque feuillard peut comprendre des fibres de carbone ou des fibres de verre ou un mélange de fibres de carbone et de verre. La matrice peut être obtenue à partir d'une résine ou matériau thermodurcissable ou thermoplastique.

Selon une autre caractéristique particulière du procédé de fermeture d'un moule d'injection de l'invention, les feuillards sont en matériau métallique.

Selon une autre caractéristique particulière du procédé de fermeture d'un moule d'injection de l'invention, dans lequel chaque feuillard présente une épaisseur inférieure ou égale à 0,2mm.

Selon une autre caractéristique particulière du procédé de fermeture d'un moule d'injection de l'invention, des secteurs angulaires sont d'abord positionnés et fixés sur le mandrin à une distance déterminée les uns des autres de manière à ménager un espace entre deux secteurs angulaires, les secteurs angulaires restants étant ensuite positionnés et fixés sur le mandrin dans les espaces ménagés entre les secteurs angulaires déjà fixés.

Selon une autre caractéristique particulière du procédé de fermeture d'un moule d'injection de l'invention, chaque secteur angulaire comporte des première et deuxième rainures présentes respectivement sur les première et deuxième faces latérales, les rainures s'étendant suivant la direction axiale, un joint d'étanchéité étant logé à la fois dans la première rainure d'une première face latérale d'un secteur angulaire et dans la deuxième rainure d'une deuxième face latérale d'un secteur angulaire adjacent.

L'invention a également pour objet un procédé de fabrication d'une pièce de révolution en matériau composite comprenant:
- la réalisation par tissage tridimensionnel ou multicouche d'une texture fibreuse sous forme d'une bande,
- l'enroulement de la texture fibreuse sur plusieurs tours superposés sur un mandrin d'un moule d'injection de manière à former une préforme fibreuse, le moule d'injection comprenant une pluralité de secteurs angulaires,
- la fermeture du moule d'injection conformément à l'invention,
- la densification de la préforme fibreuse par une matrice de manière à obtenir une pièce de révolution en matériau composite comprenant un renfort fibreux densifié par une matrice,
- le démoulage de la pièce en matériau composite.

### Brève description des dessins

[Fig. 1] La figure 1 est une vue schématique en perspective d'un moule d'injection selon l'art antérieur,
[Fig. 2A] La figure 2A est une vue partielle en coupe radiale montrant une étape de fermeture du moule de la figure 1,
[Fig. 2B] La figure 2B est une vue partielle en coupe radiale montrant une autre étape de fermeture du moule de la figure 1,
[Fig. 2C] La figure 2C est une vue partielle en coupe radiale montrant une autre étape de fermeture du moule de la figure 1,
[Fig. 3] La figure 3 est une vue schématique en perspective d'un carter de soufflante en matériau composite,
[Fig. 4] La figure 4 est une vue schématique en perspective d'un moule d'injection conformément à un mode de réalisation de l'invention,
[Fig. 5] La figure 5 est une vue schématique en perspective montrant un secteur angulaire du moule de la figure 4,
[Fig. 6] La figure 6 est une autre vue schématique en perspective montrant un secteur angulaire du moule de la figure 4,
[Fig. 7] La figure 7 est une vue schématique en perspective montrant un feuillard du moule de la figure 4,
[Fig. 8] La figure 8 est une autre vue schématique en perspective montrant un feuillard du moule de la figure 4,
[Fig. 9A] La figure 9A est une vue partielle en coupe radiale montrant le début de positionnement d'un secteur angulaire lors de la fermeture du moule de la figure 4,
[Fig. 9B] La figure 9B est une vue partielle en coupe radiale montrant le moule de la figure 4 fermé,
[Fig. 10] La figure 10 est une vue en coupe radiale et axiale du moule de la figure 9B.

### Description des modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

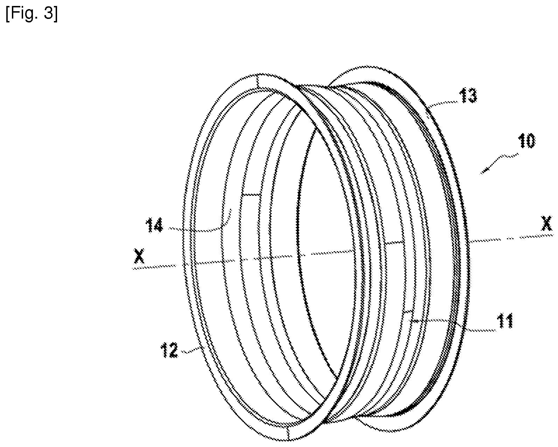

La figure 3 montre une vue en perspective d'un carter de soufflante 10 pouvant être fabriqué en utilisant un moule et un procédé selon l'invention. Un tel carter est centré sur un axe longitudinal X-X et comprend une paroi annulaire 11 délimitée à l'amont par une bride amont 12 et à l'aval par une bride aval 13 (l'amont et l'aval étant définis par rapport au sens d'écoulement du flux gazeux dans la turbine à gaz). La surface interne 14 de la paroi annulaire 11 est destinée à délimiter la veine d'entrée d'air dans la turbine à gaz et/ou supporter des panneaux (atténuation acoustique, abradable, etc.).

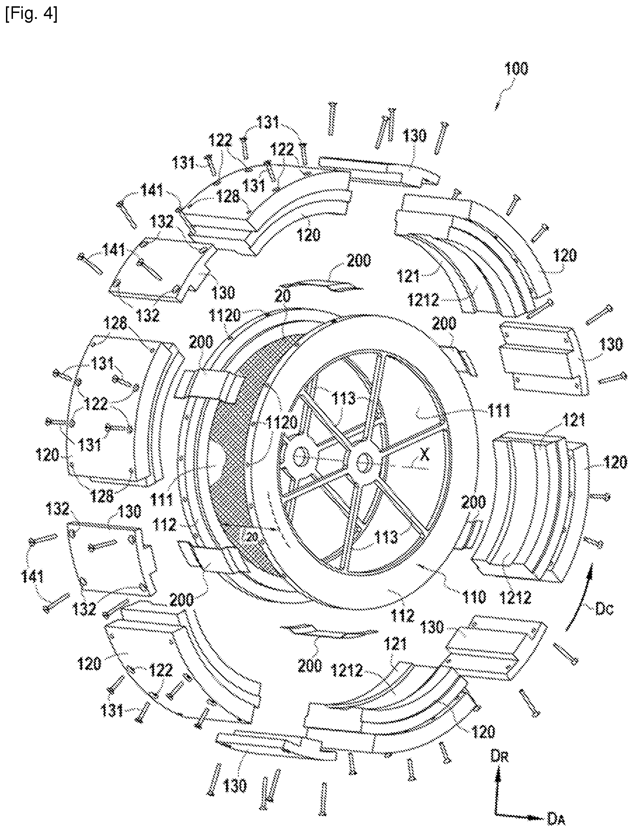

La figure 4 est une vue schématique en perspective d'un moule selon l'invention en cours de fermeture. Un tel moule peut être utilisé pour l'imprégnation par un procédé du type RTM (« Resin Transfer Molding ») d'une préforme fibreuse afin de fabriquer un carter de soufflante 10 tel que celui présenté précédemment. La préforme fibreuse peut être réalisée par tissage tridimensionnel d'une texture fibreuse en forme bande avec des fibres, par exemple de carbone, verre, aramide ou céramique, et la matrice d'imprégnation peut être en polymère, par exemple époxide, bismaléimide ou polyimimde.

Le moule 100 est monté de façon rotative sur un axe d'entraînement (non représenté) centré sur l'axe X-X, et comprend un mandrin 110. Par la suite, les directions axiale D_{A} et radiale D_{R} seront définies par rapport à cet axe X-X, la direction axiale D_{A} étant parallèle à l'axe X-X et la direction radiale D_{R} étant perpendiculaire à l'axe X-X. Il sera également fait référence à une direction circonférentielle D_{C} qui, comme montrée sur la figure 4, correspond à une direction qui est tangente à tout cercle centré sur l'axe X-X. Cette direction est perpendiculaire à la fois à la direction axiale D_{A} et à une direction radiale D_{R}.

Le mandrin 110 comprend une paroi annulaire 111 prenant la forme d'un fût supportant une préforme fibreuse 20 formée par enroulement d'une bande fibreuse, et deux flasques latéraux 112. Le mandrin 110 est maintenu sur son axe d'entraînement par l'intermédiaire de rayons 113.

Les flasques 112 forment un appui destiné à recevoir les parties rabattues de la préforme 20 enroulée sur le mandrin 110, et qui sont destinées à former les brides amont 12 et aval 13 du carter de soufflante 10.

Le moule 100 comprend en outre un contre-moule composé de plusieurs secteurs angulaires 120 (ici au nombre de six) assemblés de façon étanche sur le mandrin 110. Dans l'exemple décrit ici, les secteurs sont verrouillés entre eux de façon étanche par des clefs de verrouillage 130 qui maintiennent un joint plat entre les secteurs (non représenté sur la figure 4). Selon une variante de réalisation, les secteurs peuvent être directement verrouillés entre eux par boulonnage en utilisant des vis obliques. Dans ce cas, l'étanchéité entre les secteurs est réalisée par compaction d'un joint logé dans des rainures présentes sur les bords latéraux des secteurs comme expliqué ci-après.

Les secteurs angulaires 120 sont assemblés sur les flasques latéraux 112 par des vis de serrage 131 passant dans des orifices 122 présents dans les secteurs 120 et vissées dans des trous taraudés 1120 présents sur les flasques latéraux 112. Les vis 131 permettent l'assemblage des secteurs 120 sur les flasques 112 et le réglage de la pression de compaction qui est appliquée sur la préforme fibreuse 20.

Dans l'exemple décrit ici, les secteurs angulaires 120 sont verrouillés entre eux par des vis de serrage 141 passant dans des orifices 132 présents dans les clefs de verrouillage 130 et vissées dans trous taraudés 128 présents sur les secteurs angulaires 120 ou dans des boulons intégrés à l'outillage. Une clef 130 est fixée entre deux secteurs 120 adjacents par deux rangées de vis 141 s'étendant longitudinalement sur les extrémités de chaque secteur 120. L'assemblage des clefs de verrouillage 130 se fait radialement par l'extérieur, une fois les secteurs 120 assemblés sur le mandrin 110. De la sorte, les clefs assurent un serrage circonférentiel des secteurs 120 entre eux.

Des joints toriques (non représentés) positionnés sur les flasques 112 assurent l'étanchéité entre les secteurs 120 et le mandrin 110.

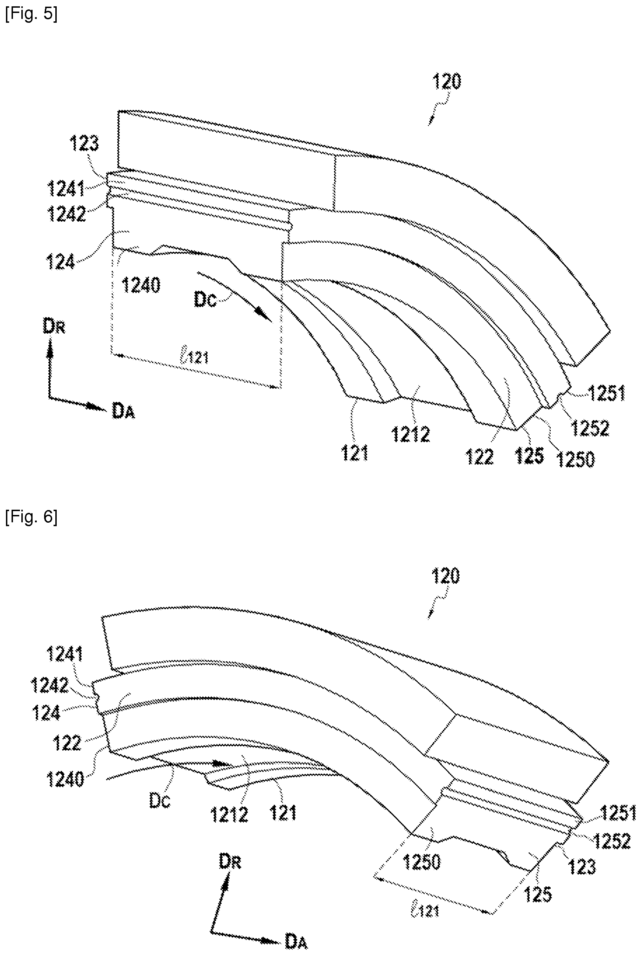

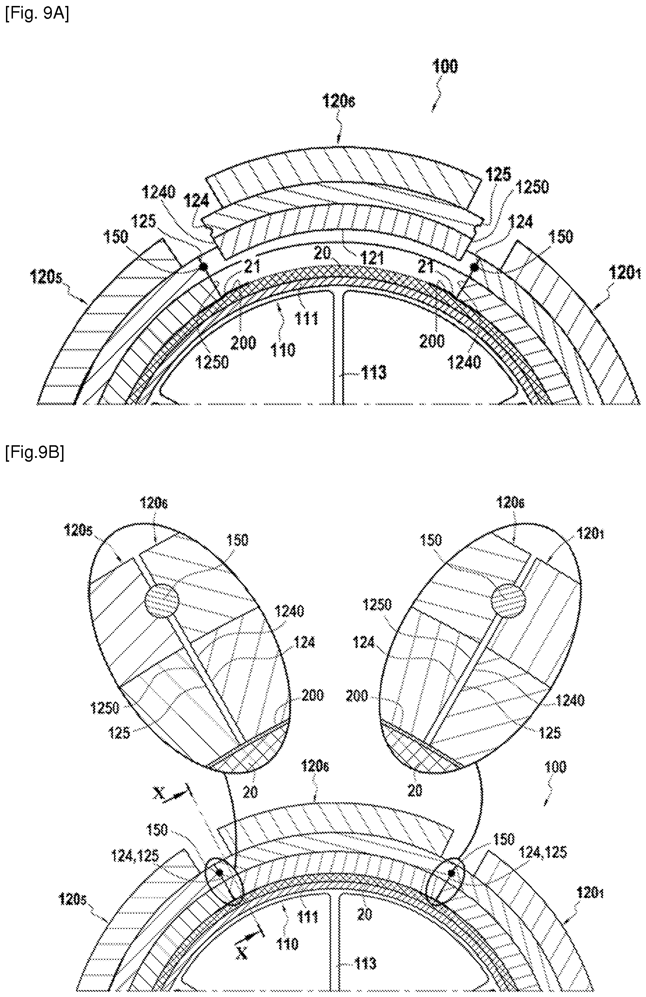

Les figures 5 et 6 illustrent un secteur angulaire 120. Chaque secteur angulaire 120 comprend une base annulaire 121 destinée à venir en contact de la texture fibreuse 20. La base annulaire s'étend entre des premier et deuxième bords longitudinaux 122 et 123 suivant la direction axiale D_{A} et entre des premier et deuxième bords latéraux 124 et 125 suivant la direction circonférentielle D_{C}, le premier bord latéral 124 de la base annulaire 121 d'un secteur angulaire 120 étant en contact avec un deuxième bord latéral 125 de la base annulaire d'un secteur angulaire adjacent (figure 9B).

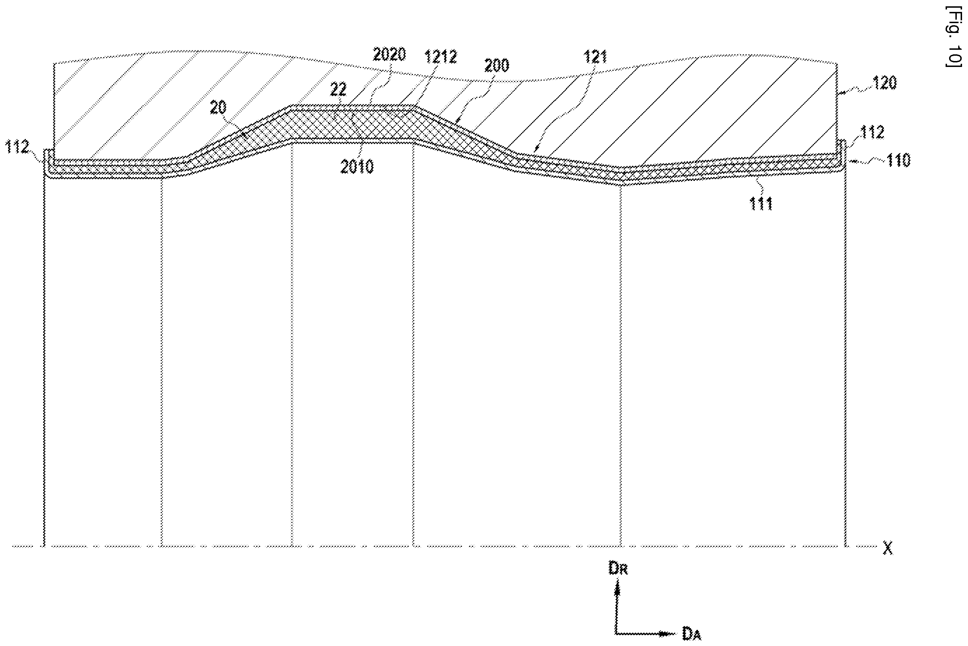

La base annulaire 121 présente une forme correspondant à celle de la pièce de dévolution à fabriquer. Dans l'exemple décrit ici, la base annulaire 121 présente une forme évolutive suivant la direction axiale D_{A} correspondant au profil évolutif du carter à fabriquer. Plus précisément, la base annulaire 121 comporte une portion en creux 1212 correspondant à la forme d'une surépaisseur 22 présente sur la préforme 20 et destinée à former une zone de rétention dans le carter final (figure 10). La portion en creux s'étendant sur toute la longueur de la base annulaire 121 suivant la direction circonférentielle D_{C}.

Le premier bord latéral 124 de la base annulaire 121 de chaque secteur angulaire 120 comporte une portion inférieure 1240. Le deuxième bord latéral 125 de la base annulaire 121 de chaque secteur angulaire comporte une portion inférieure 1250.

Chaque secteur angulaire 120 comporte en outre une première face latérale 1241 parallèle à la direction radiale D_{R} et présente dans le prolongement du premier bord latéral 124 de la base annulaire 121, et une deuxième face latérale 1251 parallèle à la direction radiale D_{R} et présente dans le prolongement du deuxième bord latéral 125 de la base annulaire 121. Cela facilite la fixation des secteurs 120 sur le mandrin 110.

Par ailleurs, des première et deuxième rainures 1242 et 1252 peuvent être présentes respectivement sur les première et deuxième faces latérales 1241 et 1251, les rainures s'étendant suivant la direction axiale D_{A}. Un joint d'étanchéité 150 est logé à la fois dans la première rainure 1242 d'une première face latérale 1241 d'un secteur angulaire et dans la deuxième rainure 1252 d'une deuxième face latérale 1251 d'un secteur angulaire adjacent. Cela permet d'obtenir une étanchéité entre les secteurs et de verrouiller les secteurs directement entre eux sans utiliser de clés de serrage et de joints plats comme décrits ci-avant.

Conformément à l'invention, des feuillards 200 sont positionnés sur la surface exposée de la préforme fibreuse 20 avant la fermeture du moule d'injection 100 par les secteurs angulaires 120. Plus précisément, un feuillard 200 est placé à chaque endroit de la surface exposée de la préforme 20 qui est destinée être en regard d'une zone de jonction entre deux bords latéraux de la base annulaire de deux secteurs angulaires adjacents (figure 4). Chaque feuillard 200 présente des dimensions aptes à couvrir cette zone. Dans l'exemple décrit ici, chaque feuillard 200 présente suivant la direction axiale D_{A} une largeur I₂₀₀ au moins égale à la largeur I₁₂₁ de la base annulaire 121 de chaque secteur angulaire 120 et une longueur L₂₀₀ permettant au feuillard 200 de s'étendre suivant la direction circonférentielle D_{C} au-delà des bords latéraux 124 et 125 de deux secteurs angulaires adjacents (figures 4, 7 et 8). La longueur des feuillards peut être inférieure à la largeur de la préforme fibreuse lorsque les zones à risque de pincement ne sont présentes sur toute la largeur de la préforme. Selon une variante de réalisation plusieurs feuillards peuvent être disposés de manière adjacente suivant la direction axiale D_{A}.

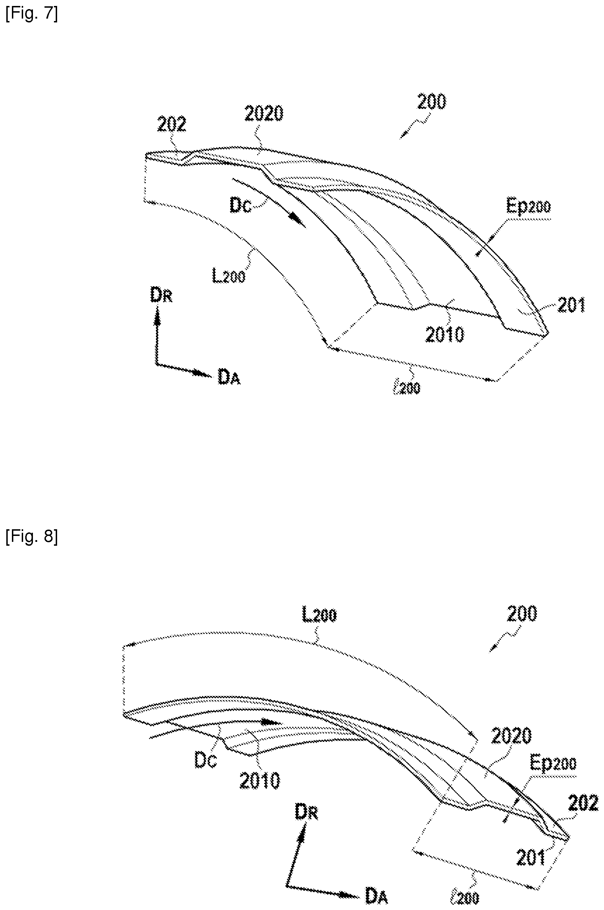

Comme illustré sur les figures 7 et 8, chaque feuillard 200 présente une forme correspondant à la forme de la base annulaire des deux secteurs angulaires adjacents au niveau de la zone de jonction. Plus précisément, la surface externe 202 de chaque feuillard destinée à venir en contact avec les bases annulaires de deux secteurs angulaires adjacents comporte une portion bombée 2020 dont la forme s'adapte parfaitement avec la portion en creux 1212 présente sur la base annulaire 121 de chaque secteur angulaire 120. De manière correspondante, la face interne 201 de chaque feuillard 200 comporte une portion en creux 2010 reprenant la forme de la portion en creux 1212 présente sur la base annulaire 121 de chaque secteur angulaire 120. Les portions 2010 et 2020 s'étendent sur toute la longueur de chaque feuillard suivant la direction circonférentielle D_{C}.

Selon un aspect de l'invention, les feuillards 200 sont réalisés en matériau composite à partir d'un renfort fibreux densifié par une matrice. Divers type de matériaux composites et de procédés de fabrication peuvent être utilisés. Les feuillards peuvent être fabriqués à partir de préformes réalisées par :
- drapage de plis unidirectionnels ou bidirectionnels en fibres de carbone, en fibres de verre ou un mélange de fibres de carbone et de verre, chaque pli étant pré-imprégné d'un précurseur de matrice tel qu'une résine époxyde par exemple,
- infusion d'une résine époxyde dans une texture fibreuse sèche obtenue par exemple par drapage de plis unidirectionnels ou bidirectionnels,
- drapage de plis unidirectionnels ou bidirectionnels en fibres de carbone, en fibres de verre ou un mélange de fibres de carbone et de verre, chaque pli étant pré-imprégné avec une résine ou un matériau thermoplastique tel que du polyétheréthercétone (PEEK), polyéthercétonecétone (PEKK) polyaryléthercétones (PAEK), polyétherimide (PEI).

La préforme de feuillard est ensuite mise en forme et traitée thermiquement pour transformer en matrice la résine ou le matériau thermodurcissable (polymérisation) ou thermoplastique (chauffage puis refroidissement).

La mise en forme de la préforme de feuillard peut être avantageusement réalisée par moulage sur la base annulaire 121 d'un secteur angulaire 120, ce qui assure que le feuillard épousera parfaitement la forme de la base annulaire lors de la fermeture du moule.

La raideur du feuillard est ajustée de manière à ce qu'il présente une flexibilité suffisante pour ne pas rompre lors de sa déformation imposée par le secteur angulaire fixé en premier comme expliqué ci-après.

Les feuillards peuvent également réalisés en matériau métallique notamment par estampage de tôle ou fabrication additive (par exemple par électrodéposition de nickel) suivant la même forme que celle de la base annulaire des secteurs angulaires.

Chaque feuillard en matériau composite ou en matériau métallique présente une épaisseur Eₚ₂₀₀ inférieure ou égale à 0,2mm notamment afin de ne pas former une empreinte trop importante dans la préforme fibreuse lors de la fermeture du moule.

Les figures 9A et 9B illustrent le positionnement d'un secteur angulaire lors de la fermeture du moule 100. Plus précisément, sur la figure 9A, un dernier secteur angulaire 120₆ est en cours de positionnement entre deux secteurs angulaires 120₁ et 120₅ déjà positionnés afin de finaliser la fermeture du moule 100. Selon une caractéristique du procédé de fermeture de moule de l'invention, on place et on fixe d'abord un secteur angulaire sur deux puis on complète la fermeture en fermant les espaces libres entre deux secteurs angulaires avec les secteurs restants. D'autres configurations de fermeture du moule sont toutefois envisageables.

Sur la figure 9A, la préforme fibreuse 20 présente des boursouflures 21 au voisinage du bord latéral 125 du secteur angulaire 120₅ et du bord latéral 124 du secteur angulaire 120₁ en raison de son compactage par ces secteurs angulaires. Conformément à l'invention, un feuillard 200 est présent sur la surface exposée de la préforme 20 au niveau de chaque boursouflure 21. A cette étape de la fermeture du moule, les feuillard 200 sont déformés au niveau des boursouflures 21 sous l'effet de l'effort de compaction imposé par les secteurs angulaires déjà positionnés (les secteurs 120₅ et 120₁ sur la figure 9A).

La fermeture du moule se poursuit par le positionnement et la fixation du dernier secteur angulaire 120₆ comme illustré sur la figure 9B. Lors de la mise en place de ce secteur, les boursouflures 21 ne peuvent pas pénétrer dans l'espace présent entre les secteurs angulaires en raison de la présence des feuillards 200. Les feuillards 200 empêchent que la portion de préforme présente au niveau des boursouflures 21 soit repoussée contre les bords latéraux des secteurs 120₅ et 120₁, ce qui permet d'éviter tout pincement de la préforme entre les bords latéraux de deux secteurs adjacents.

Comme on peut le voir sur la figure 10, une fois le moule fermé, chaque feuillard 200 suit parfaitement la forme de la base annulaire 121 de chaque secteur angulaire 120 du moule 100. Dans l'exemple décrit ici, chaque feuillard 200 présente suivant la direction axiale D_{A} une forme identique à celle du profil des bases annulaires 121 des secteurs angulaires adjacents entre lesquels il est placé. Chaque feuillard 200 comporte ici en particulier sur sa surface externe une portion bombée 2020 dont la forme s'adapte à la forme de la portion en creux 1212 présente sur la base annulaire 121 de chaque secteur angulaire 120 et correspondant à la forme d'une surépaisseur 22 présente sur la préforme 20 et destinée à former une zone de rétention dans le carter final.

Avec les feuillards selon l'invention, on évite l'apparition de défauts de type « pinch fibers » sur la pièce finie. Il est ainsi possible de compacter la préforme 20 avec chacun des secteurs angulaires 120 sans conséquence sur les propriétés mécaniques de la pièce finie.

La fabrication du carter 10 représenté sur la figure 3 débute par la réalisation d'une texture fibreuse par tissage tridimensionnel entre des fils de chaîne et des fils de trame. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables. Les fils utilisés peuvent être notamment des fils en fibres de carbone, de verre ou de carbure de silicium. La texture fibreuse présente une forme de bande qui est enroulée sur plusieurs tours sur le mandrin 110 du moule 100 pour former la préforme fibreuse 20.

Le moule 100 est ensuite fermé au moyen des secteurs angulaires 120 décrits précédemment, ces secteurs réalisant en outre un compactage de la préforme 20.

On procède ensuite à la densification de la préforme fibreuse qui consiste à combler la porosité de cette dernière par le matériau constitutif de la matrice. A cet effet, on injecte le précurseur liquide de matrice, par exemple une résine, dans toute la préforme présente dans le moule. La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

La densification de la préforme fibreuse peut être réalisée par le procédé bien connu de moulage par transfert dit RTM (« Resin Transfert Moulding ») qui consiste à injecter une résine thermodurcissable dans l'espace interne du moule contenant la préforme fibreuse, un gradient de pression étant généralement établi dans cet espace interne entre l'endroit où est injecté la résine et les orifices d'évacuation de cette dernière afin de contrôler et d'optimiser l'imprégnation de la préforme par la résine. Une fois la résine injectée dans toute la préforme, on procède à sa polymérisation par traitement thermique conformément au procédé RTM.

Après l'injection et la polymérisation, la pièce est démoulée.

La pièce est finalement détourée pour enlever l'excès de résine et les chanfreins sont usinés pour obtenir un carter 10 présentant une forme de révolution comme illustré sur la figure 3.

## Revendications

1. Procédé de fermeture d'un moule d'injection (100) pour la fabrication d'une pièce de révolution en matériau composite, le moule comprenant :
- un mandrin (110) supportant une préforme fibreuse (20) obtenue par enroulement d'une bande fibreuse, le mandrin comprenant une paroi annulaire (111) dont le profil de la surface extérieure correspond à celui de la surface interne (14) de la pièce à fabriquer,
- une pluralité de secteurs angulaires (120) comprenant une base annulaire (121) destinée à venir en contact de la texture fibreuse (20), la base annulaire s'étendant entre des premier et deuxième bords longitudinaux (122, 123) suivant une direction axiale (D_{A}) et entre des premier et deuxième bords latéraux (124, 125) suivant une direction circonférentielle (D_{C}) , la base annulaire de chaque secteur présentant une forme correspondant à la forme de la pièce de révolution à fabriquer,
le procédé comprenant le positionnement et la fixation successifs des secteurs angulaires (120) sur le mandrin (110), la base annulaire (121) de chaque secteur compactant la portion de préforme fibreuse présente en vis-à-vis, les bords latéraux (124, 125) de la base annulaire (121) de chaque secteur angulaire (120) étant en contact avec les bords latéraux (124, 125) de la base annulaire (121) des secteurs adjacents,
**caractérisé en ce que**, avant le positionnement et la fixation des secteurs angulaires sur le mandrin, des feuillards (200) sont placés sur la surface exposée de la préforme fibreuse (20), chaque feuillard (200) couvrant une zone de la préforme fibreuse située en regard d'une zone de jonction entre deux bords latéraux (124, 125) de la base annulaire (121) de deux secteurs angulaires adjacents (120) et **en ce que** chaque feuillard présente une forme correspondant à la forme de la base annulaire des deux secteurs angulaires adjacents au niveau de la zone de jonction.

2. Procédé selon la revendication 1, dans lequel les feuillards (200) sont en matériau composite comprenant un renfort fibreux densifié par une matrice.

3. Procédé selon la revendication 2, dans lequel le renfort fibreux de chaque feuillard comprend des fibres de carbone ou des fibres de verre ou un mélange de fibres de carbone et de verre.

4. Procédé selon la revendication 2 ou 3, dans lequel la matrice est obtenue à partir d'une résine ou matériau thermodurcissable ou thermoplastique.

5. Procédé selon la revendication 1, dans lequel les feuillards sont en matériau métallique.

6. Procédé selon l'une quelconque des revendications 2 à 5, dans lequel chaque feuillard (200) présente une épaisseur inférieure ou égale à 0,2 mm.

7. Procédé selon l'une quelconque des revendications 1 à 6, dans lequel des secteurs angulaires (120) sont d'abord positionnés et fixés sur le mandrin (110) à une distance déterminée les uns des autres de manière à ménager un espace entre deux secteurs angulaires, les secteurs angulaires (120) restants étant ensuite positionnés et fixés sur le mandrin (110) dans les espaces ménagés entre les secteurs angulaires déjà fixés.

8. Procédé selon l'une quelconque des revendications 1 à 7, dans lequel chaque secteur angulaire (120) comporte des première et deuxième rainures (1242, 1252) présentes respectivement sur les première et deuxième faces latérales (1241, 1251), les rainures s'étendant suivant la direction axiale (D_{A}), un joint d'étanchéité (150) étant logé à la fois dans la première rainure (1242) d'une première face latérale d'un secteur angulaire et dans la deuxième rainure (1252) d'une deuxième face latérale d'un secteur angulaire adjacent.

9. Procédé de fabrication d'une pièce de révolution en matériau composite (30) comprenant:
- la réalisation par tissage tridimensionnel ou multicouche d'une texture fibreuse sous forme d'une bande,
- l'enroulement de la texture fibreuse sur plusieurs tours superposés sur un mandrin (110) d'un moule d'injection (100) de manière à former une préforme fibreuse (20), le moule d'injection comprenant une pluralité de secteurs angulaires (120),
- la fermeture du moule d'injection (100) conformément à l'une des revendications 1 à 8,
- la densification de la préforme fibreuse (20) par une matrice de manière à obtenir une pièce de révolution en matériau composite (30) comprenant un renfort fibreux densifié par une matrice,
- le démoulage de la pièce en matériau composite.

## Patentansprüche

1. Verfahren zum Schließen einer Spritzgießform (100) für die Fertigung eines rotationssymmetrischen Teils aus Verbundmaterial, wobei die Form umfasst:
- eine Spindel (110), die eine Faservorform (20) trägt, welche durch Aufwickeln eines Faserbandes erhalten wird, wobei die Spindel eine ringförmige Wand (111) umfasst, deren Profil der Außenfläche dem Profil der Innenfläche (14) des zu fertigenden Teils entspricht,
- mehrere Winkelsektoren (120), die eine ringförmige Basis (121) umfassen, die dazu bestimmt ist, mit der Fasertextur (20) in Kontakt zu gelangen, wobei die ringförmige Basis sich zwischen einer ersten und einer zweiten Längskante (122, 123) einer axialen Richtung (D_{A}) folgend und zwischen einer ersten und einer zweiten Seitenkante (124, 125) einer Umfangsrichtung (Dc) folgend erstreckt, wobei die ringförmige Basis eines jeden Sektors eine Form aufweist, die der Form des zu fertigenden rotationssymmetrischen Teils entspricht,
wobei das Verfahren das Positionieren und das Befestigen eines jeden Winkelsektors (120, 160) der Reihe nach auf der Spindel (110) umfasst, wobei die ringförmige Basis (121) eines jeden Sektors den Abschnitt der Faservorform, der ihr gegenüber vorliegt, verdichtet, wobei die Seitenkanten (124, 125) der ringförmigen Basis (121) eines jeden Winkelsektors (120) mit den Seitenkanten (124, 125) der ringförmigen Basis (121) von benachbarten Winkelsektoren in Kontakt stehen,
**dadurch gekennzeichnet, dass** vor dem Positionieren und dem Befestigen der Winkelsektoren auf der Spindel Auflagen (200) auf der freiliegenden Oberfläche der Faservorform (20) platziert werden, wobei jede Auflage (200) eine Zone der Faservorform bedeckt, die sich gegenüber einer Vereinigungszone zwischen zwei Seitenkanten (124, 125) der ringförmigen Basis (121) von zwei benachbarten Winkelsektoren (120) befindet, und dass jede Auflage eine Form aufweist, die der Form der ringförmigen Basis von zwei benachbarten Winkelsektoren an der Vereinigungszone entspricht.

2. Verfahren nach Anspruch 1, wobei die Auflagen (200) aus Verbundmaterial bestehen, das eine durch eine Matrix verdichtete Faserverstärkung umfasst.

3. Verfahren nach Anspruch 2, wobei die Faserverstärkung einer jeden Auflage Kohlenstofffasern oder Glasfasern oder eine Mischung aus Kohlenstoff- und Glasfasern umfasst.

4. Verfahren nach Anspruch 2 oder 3, wobei die Matrix ausgehend von einem wärmehärtbaren oder thermoplastischen Harz oder Material erhalten wird.

5. Verfahren nach Anspruch 1, wobei die Auflagen aus Metallmaterial bestehen.

6. Verfahren nach einem der Ansprüche 2 bis 5, wobei jede Auflage (200) eine Dicke von weniger oder gleich 0,2 mm aufweist.

7. Verfahren nach einem der Ansprüche 1 bis 6, wobei zuerst Winkelsektoren (120) auf der Spindel (110) in einem bestimmten Abstand voneinander auf eine Weise positioniert und befestigt werden, dass ein Zwischenraum zwischen zwei Winkelsektoren geschaffen wird, wobei die verbleibenden Winkelsektoren (120) in der Folge in den geschaffenen Zwischenräumen zwischen den bereits befestigten Winkelsektoren auf der Spindel (110) positioniert und befestigt werden.

8. Verfahren nach einem der Ansprüche 1 bis 7, wobei jeder Winkelsektor (120) erste und zweite Nuten (1242, 1252) beinhaltet, die jeweils auf der ersten und zweiten Seitenfläche (1241, 1251) vorliegen, wobei sich die Nuten der axialen Richtung (D_{A}) folgend erstrecken, wobei jeweils eine Dichtung (150) in der ersten Nut (1242) einer ersten Seitenfläche eines Winkelsektors und in der zweiten Nut (1252) einer zweiten Seitenfläche eines benachbarten Winkelsektors aufgenommen ist.

9. Verfahren zur Fertigung eines rotationssymmetrischen Teils aus Verbundmaterial (30), wobei das Verfahren umfasst:
- die Verwirklichung einer Fasertextur in Form eines Bandes durch dreidimensionales oder mehrschichtiges Verweben,
- das Aufwickeln der Fasertextur in mehreren übereinanderliegenden Wicklungen auf einer Spindel (110) einer Spritzgießform (100) auf eine Weise, um eine Faservorform (20) zu bilden, wobei die Spritzgießform mehrere Winkelsektoren (120) umfasst,
- das Schließen der Spritzgießform (100) in Übereinstimmung mit einem der Ansprüche 1 bis 8,
- die Verdichtung der Faservorform (20) durch eine Matrix auf eine Weise, um ein rotationssymmetrisches Teil aus Verbundmaterial (30), das eine durch eine Matrix verdichtete Faserverstärkung umfasst, zu erhalten,
- das Entformen des Teils aus Verbundmaterial.

## Claims

1. A method for closing an injection mold (100) for the manufacture of a revolution part made of composite material, the mold comprising:
- a mandrel (110) supporting a fiber preform (20) obtained by winding of a fiber web, the mandrel comprising an annular wall (111), the profile of the external surface of which corresponds to that of the inner surface (14) of the part to be manufactured,
- a plurality of angular sectors (120) comprising an annular base (121) intended to come into contact with the fiber texture (20), the annular base extending between first and second longitudinal edges (122, 123) along an axial direction (D_{A}) and between first and second side edges (124, 125) along a circumferential direction (D_{C}), the annular base of each sector having a shape corresponding to the shape of the revolution part to be manufactured,
the method comprising the successive positioning and fixing of the angular sectors (120) on the mandrel (110), the annular base (121) of each sector compacting the fiber preform portion present oppositely, the side edges (124 , 125) of the annular base (121) of each angular sector (120) being in contact with the side edges (124, 125) of the annular base (121) of the adjacent sectors,
**characterized in that**, before the positioning and fixing of the angular sectors on the mandrel, strips (200) are placed on the exposed surface of the fiber preform (20), each strip (200) covering an area of the fiber preform located facing a junction area between two side edges (124, 125) of the annular base (121) of two adjacent angular sectors (120) and **in that** each strip has a shape corresponding to the shape of the annular base of the two adjacent angular sectors at the junction area.

2. The method according to claim 1, wherein the strips (200) are made of composite material comprising a fiber reinforcement densified by a matrix.

3. The method according to claim 2, wherein the fiber reinforcement of each strip comprises carbon fibers or glass fibers or a mixture of carbon and glass fibers.

4. The method according to claim 2 or 3, wherein the matrix is obtained from a thermosetting or thermoplastic resin or material.

5. The method according to claim 1, wherein the strips are made of metal material.

6. The method according to any one of claims 2 to 5, wherein each strip (200) has a thickness less than or equal to 0.2 mm.

7. The method according to any one of claims 1 to 6, wherein angular sectors (120) are first positioned and fixed on the mandrel (110) at a determined distance from each other so as to arrange a space between two angular sectors, the remaining angular sectors (120) then being positioned and fixed on the mandrel (110) in the spaces arranged between the already fixed angular sectors.

8. The method according to any one of claims 1 to 7, wherein each angular sector (120) includes first and second grooves (1242, 1252) present respectively on the first and second side faces (1241, 1251), the grooves extending along the axial direction (D_{A}), a seal (150) being housed both in the first groove (1242) of a first side face of an angular sector and in the second groove (1252) of a second side face of an adjacent angular sector.

9. A method for manufacturing a revolution part made of composite material (30) comprising:
- the production by three-dimensional or multilayer weaving of a fiber texture in the form of a web,
- the winding of the fiber texture on several turns superimposed on a mandrel (110) of an injection mold (100) so as to form a fiber preform (20), the injection mold comprising a plurality of angular sectors (120),
- the closing of the injection mold (100) in accordance with any of claims 1 to 8,
- the densification of the fiber preform (20) by a matrix so as to obtain a revolution part made of composite material (30) comprising a fiber reinforcement densified by a matrix,
- the demolding of the composite material part.
